# EUROPÄISCHE PATENTSCHRIFT

(11) **EP 1 858 985 B1**
(45) Veröffentlichungstag und Bekanntmachung des Hinweises auf die Patenterteilung: **01.03.2017**
(21) Anmeldenummer: 06707408.8
(22) Anmeldetag: 03.03.2006
(51) Int. Cl.: C09B 67/22, D06P 1/18, C09B 67/44

(54) **FLÜSSIGFARBSTOFFPRÄPARATIONEN VON SULFONSÄUREGRUPPENFREIEN METALLKOMPLEXFARBSTOFFEN**
LIQUID DYE PREPARATIONS BASED ON METALLISED DYE FORMULATIONS DEVOID OF SULFONIC ACID GROUPS
PREPARATIONS DE COLORANTS LIQUIDES A BASE DE COLORANTS A COMPLEXES METALLIQUES EXEMPTS DE GROUPES ACIDES SULFONIQUES

(30) Priorität: 04.03.2005 DE 102005010022
(43) Veröffentlichungstag der Anmeldung: 28.11.2007
(73) Patentinhaber: BASF SE, 67056 Ludwigshafen am Rhein (DE)
(72) Erfinder: REINHARDT, Robert, 67149 Meckenheim (DE); DORNER, Michael, 64625 Bensheim (DE); ADAMS, Stefan, 67065 Ludwigshafen (DE); BUCHHOLZ, Oliver, 68623 Lampertheim (DE); HEISER, Stephan, 67161 Gönnheim (DE)
(74) Vertreter: BASF IP Association
(86) Internationale Anmeldenummer: PCT/EP2006/001978
(87) Internationale Veröffentlichungsnummer: WO 2006/092329

(56) Entgegenhaltungen:
- EP-A- 0 024 609
- GB-A- 1 207 520
- RO-A2- 95 762
- US-A- 3 317 271
- US-A- 5 391 207
- PATENT ABSTRACTS OF JAPAN Bd. 1998, Nr. 13, 30. November 1998 (1998-11-30) & JP 10 204346 A (SAKATA CORP), 4. August 1998 (1998-08-04)

## Beschreibung

Die Erfindung betrifft Flüssigfarbstoffpräparationen von sulfonsäuregruppenfreien Metallkomplexfarbstoffen und deren Verwendung zur Herstellung wässriger Farbstoffflotten, insbesondere zur Herstellung von Farbstoffflotten für die Spritzfärbung von Leder.

Bei der Lederzurichtung, insbesondere bei der Spritzfärbung von Leder, werden häufig flüssige Farbstoffpräparationen (häufig auch als Flüssigfarbstoffpräparationen bezeichnet) von sulfonsäuregruppenfreien Metallkomplexfarbstoffen, insbesondere von 1:2 Azometallkomplexfarbstoffen eingesetzt. Auf die Lederoberfläche aufgebracht ergeben diese Farbstoffe farbstarke, egale Färbungen der Lederoberfläche (sogenannte Topfärbungen), da diese Farbstoffe aufgrund ihrer chemischen Eigenschaften nur eine geringe Tendenz zeigen, das Leder zu durchdringen. Je nach Anwendungsgebiet und Applikationstechnik werden derartige Metallkomplexfarbstoffe in Form konzentrierter Stammlösungen bereitgestellt, die für die Anwendung mit Lösungsmittel, vorzugsweise aber mit einem Gemisch aus überwiegend Wasser und wassermischbaren Lösungsmitteln zu einer Färbeflotte bzw. einer Spritzflotte verdünnt werden. Die Stammlösungen bestehen in der Regel aus Farbstoff, gelöst in einem wassermischbaren Lösungsmittel oder Lösungsmittelgemisch aus wassermischbaren Lösungsmitteln und ggf. einem geringen Anteil Wasser und üblichen Additiven. Als wassermischbare Lösungsmittel werden hierzu vor allem niedere Alkohole wie Methanol, Ethanol, Isopropanol, Glykole, Polyglykole und deren Monoether und Monoester eingesetzt.

Je nach Qualität des zum Ansetzen der Flotte verwendeten Wassers, insbesondere mit hartem, d.h. Ca- und Mg-lonen-haltigem Wasser, bilden sich jedoch bei und nach dem Verdünnen in der Spritzflotte schwerlösliche Anteile, die zu unerwünschten Effekten bei der Färbung, vor allem zum sogenannten "Bronzieren", führen. Dem wird in der Praxis durch höhere Anteile an organischen Lösungsmitteln in der Flotte Rechnung getragen. Dadurch sinkt aber in der Applikation der gewünschte starke Farbeffekt an der Lederoberfläche, da mit mehr Lösungsmittel ein Grossteil des Farbstoffs in die Ledermatrix verschleppt wird.

Eine übliche Maßnahme zur Verbesserung der Stabilität flüssiger Farbstoffpräparationen derartiger Farbstoffe und zur Verringerung des Bronzier-Effekts ist der Einsatz geeigneter Co-Solventien. Hierbei handelt es sich in der Regel um mit Wasser unbegrenzt mischbare Additive, insbesondere um Lactame wie N-Methylpyrrolidon, N-Alkyl-Amide wie Dimethylformamid und Dimethylacetamid sowie N-Alkylharnstoffe wie Tetramethylharnstoff. Basislösungsmittel für die Farbstoffe sind jeweils mit Wasser unbegrenzt mischbare Alkohole, Glykole, Polyglykole, deren mit Wasser unbegrenzt mischbare Monoether, Monoester und deren Gemische sowie Ethylencarbonat und Propylencarbonat. N-alkylierte Carbonsäureamide und Lactame, wie N-Methylpyrrolidon (NMP), Dimethylformamid (DMF), Dimethylacetamid (DMAC) besitzen jedoch ein erhöhtes toxisches Potential und sind daher aus arbeitshygienischen und Verbraucherschutzgründen unerwünscht. Zudem sind diese Mittel teilweise nicht geeignet, die Stabilität von Farbstoffpräparationen sulfonsäuregruppenfreier Metallkomplexfarbstoffe beim Verdünnen mit Wasser, insbesondere hartem Wasser, nachhaltig zu verbessern.

Die DE-A 28 02 326 beschreibt konzentrierte Flüssigfarbstoffpräparationen, die neben einem Farbstoff, Wasser und/oder ein mit Wasser mischbares organischen Lösungsmittel sowie
- wenigstens eine nichtionische, hydrotrop wirkende Verbindung, z.B. ein Umsetzungsprodukt eines C₁-C₆-Alkanols, eines Monoalkyl- oder Monoalkylolamins oder eines Polyalkylenpolyamins mit Propylenoxid, ein Umsetzungsprodukt eines aliphatischen Monoalkanols mit mindestens 8 C-Atomen und einem Alkylenoxid, etc, wobei das Umsetzungsprodukt ein Molekulargewicht im Bereich von 2000 bis 7000 aufweist, und
- wenigstens einen weiteren Bestandteil, der unter anionischen Tensiden mit Polyetherstruktur und Umsetzungsprodukten einer Fettsäure mit 1 bis 2 Mol Diethanolamin ausgewählt ist,
umfassen.

Die EP-A 169 816 beschreibt Flüssigformulierungen anionischer Farbstoffe, die als Lösungsmittel einen C₁-C₄-Monoalkylether des Propylenglykols oder des Butylenglykols und/oder deren C₁-C₄-Monocarbonsäureester enthalten.

EP 00 524 520 wiederum beschreibt Flüssigfarbstoffpräparationen für die Lederfärbung, welche neben einem oder mehreren ionogenen metallfreien Azofarbstoffen und/oder metallhaltigen Azo- und/oder Azomethinfarbstoffen wenigstens einen Alkoxyalkohol, wenigstens ein unter Lactonen, Lactamen und cyclischen Harnstoffen ausgewähltes Lösungsmittel und Wasser enthalten.

JP 10204346 beschreibt Tintenzusammensetzungen für Tintenstrahldrucker, die einen Farbstoff, Nitrocellulose, einen niederen Alkohol mit 1 bis 4 Kohlenstoffatomen, Weichmacher und Propylenglycolmonomethylether und/oder Propylenglycolmonoethylether enthalten.

Die im Stand der Technik beschriebenen Flüssigfarbstoffpräparationen sind jedoch im Falle sulfonsäuregruppenfreier Metallkomplexfarbstoffe, insbesondere im Falle sulfonsäuregruppenfreier 1:2 Azometallkomplexfarbstoffe und sulfonsäuregruppen tragender Metallkomplexe von Tetrapyrrolo-Liganden wie Porphyrine und Phthalocyanine nicht vollständig zufriedenstellend, insbesondere im Hinblick auf die erreichten Farbstärken und das Auftreten von Bronziereffekten.

Der vorliegenden Erfindung liegt daher die Aufgabe zugrunde, Flüssigfarbstoffpräparationen von sulfonsäuregruppenfreien Metallkomplexfarbstoffen, insbesondere von Flüssigfarbstoffpräparationen von sulfonsäuregruppenfreien 1:2 Azometallkomplexfarbstoffen bereitzustellen, welche die Nachteile des Standes der Technik überwinden, d.h. die eine gute Stabilität beim Verdünnen mit Wasser, insbesondere mit hartem Wasser aufweisen und gleichzeitig das Auftreten von Bronzier-Effekten vermindern und mit denen sich hohe Farbstärken erreichen lassen.

Es wurde überraschenderweise gefunden, dass diese Aufgabe durch die im folgenden beschriebenen Flüssigfarbstoffpräparationen, welche neben einem sulfonsäuregruppenfreien Metallkomplexfarbstoff A ein Gemisch wenigstens zweier organischer Lösungmittel und gegebenenfalls Wasser umfassen, wobei das Lösungsmittelgemisch im Wesentlichen
i) wenigstens ein erstes Lösungsmittel der im Folgenden definierten allgemeinen Formel I, das bei 25°C eine Löslichkeit in Wasser von mehr als 100 g/l aufweist; und
ii) wenigstens ein zweites, wenigstens ein Sauerstoffatom aufweisendes organisches Lösungsmittel, das bei 25°C eine Löslichkeit in Wasser von weniger als 100 g/l aufweist, enthält, gelöst wird.

Dementsprechend betrifft die vorliegende Erfindung Flüssigfarbstoffpräparationen eines Metallkomplexfarbstoffs A, der keine Sulfonsäuregruppen aufweist, umfassend wenigstens einen organischen Metallkomplexfarbstoff und ein Gemisch organischer Lösungsmittel sowie gegebenenfalls Wasser, wobei das Gemisch organischer Lösungsmittel im Wesentlichen, d.h. in einer Menge von wenigstens 90 Vol.%, insbesondere wenigstens 95 Vol.-% und speziell zu wenigstens 99 Vol.-%, bezogen auf die Gesamtmenge an organischen Lösungsmitteln in der Flüssigfarbstoffpräparation,
i) wenigstens ein erstes Lösungsmittel der allgemeinen Formel I

   R-(O-A)ₖ-OH (I)

   worin k für 1, 2 oder 3 steht, R für C₁-C₆-Alkyl steht und A für 1,2-Ethandiyl, 1,2-Propandiyl oder 1,3-Propandiyl steht; wobei das Lösungsmittel der Formel I bei 25°C eine Löslichkeit in Wasser von mehr als 100 g/l aufweist; und
ii) wenigstens ein zweites, wenigstens ein Sauerstoffatom aufweisendes organisches Lösungsmittel, das bei 25°C eine Löslichkeit in Wasser von weniger als 100 g/l aufweist, enthält,
wobei der Metallkomplexfarbstoff A ausgewählt ist unter
Kupferphthalocyaninen, welche 2 bis 4 Substituenten tragen, die ausgewählt sind unter amidierten Sulfonylgruppen, und deren Mischungen und
symmetrischen und unsymmetrischen 1:2 Metallkomplexen von Mono- oder Diazofarbstoffen und deren Mischungen, worin der freie Ligand des Metallkomplexfarbstoffs A durch die Formeln L1-H₂ oder L2-H₂ beschrieben wird 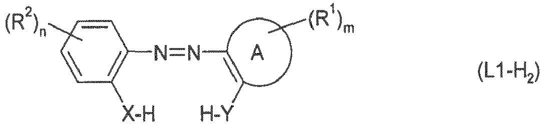 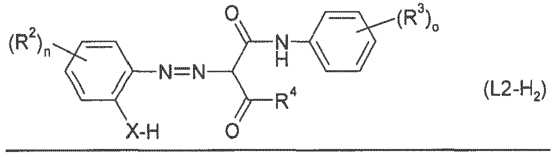 worin
- X-H und Y-H: unabhängig voneinander für OH, NH₂ oder COOH stehen;
- n, m und o: unabhängig voneinander für 0, 1, 2 oder 3 stehen;
- A: für einen unter Phenyl, Naphthyl, Pyridyl und Pyrazolyl ausgewählten aromatischen Rest steht.
- R¹: unabhängig voneinander ausgewählt ist (sind) unter Halogen, Nitro, Cyano, OH, COOH, C₁-C₄-Alkyl, C₁-C₄-Alkoxy, C₁-C₄-Alkoxy-C₁-C₄-alkyl, C₁-C₄-Alkylsulfonyl, Aminosulfonyl, Mono- oder Di-C₁-C₄-alkylaminosulfonyl, C₁-C₄-Alkyl-sulfonylamino, C₁-C₄-Alkylcarbonylamino, Phenyl und Phenylsulfonylamino, wobei der Phenylrest der beiden letztgenannten Gruppen seinerseits 1, 2 oder 3 gleiche oder verschiedene Substituenten aufweisen kann, die unter Halogen, Nitro, Cyano, OH, COOH, C₁-C₄-Alkyl, C₁-C₄-Alkoxy, C₁-C₄-Alkoxy-C₁-C₄-alkyl, C₁-C₄-Alkylsulfonylamino ausgewählt sind, wobei einer der Reste R¹ auch für eine Gruppe N=N-Ph stehen kann, worin Ph für einen Phenylrest steht, der gegebenenfalls 1, 2 oder 3 gleiche oder verschiedene Substituenten aufweisen kann, die unter Halogen, Nitro, Cyano, OH, COOH, C₁-C₄-Alkyl, C₁-C₄-Alkoxy, C₁-C₄-Alkoxy-C₁-C₄-alkyl, C₁-C₄-Alkylsulfonyl, Aminosulfonyl, Mono- oder Di-C₁-C₄-alkylaminosulfonyl und C₁-C₄-Alkylsulfonylamino ausgewählt sind;
- R², R³: unabhängig voneinander ausgewählt sind unter Halogen, Nitro, Cyano, OH, COOH, NH₂, C₁-C₄-Alkyl, C₁-C₄-Alkoxy, C₁-C₄-Alkoxy-C₁-C₄-alkyl, C₁-C₄-Alkylsulfonyl, Aminosulfonyl, Mono- oder Di-C₁-C₄-alkylaminosulfonyl, C₁-C₄-Alkylcarbonylamino und C₁-C₄-Alkylsulfonylamino oder einer der Reste R² oder R³ auch für eine Gruppe N=N-Ph stehen kann, worin Ph für einen Phenylrest steht, der gegebenenfalls 1, 2 oder 3 gleiche oder verschiedene Substituenten aufweisen kann, die unter Halogen, Nitro, Cyano, OH, COOH, C₁-C₄-Alkyl, C₁-C₄-Alkoxy, C₁-C₄-Alkoxy-C₁-C₄-alkyl, C₁-C₄-Alkylsulfonyl, Aminosulfonyl, Mono- oder Di-C₁-C₄-alkylaminosulfonyl und C₁-C₄-Alkylsulfonylamino ausgewählt sind; und
- R⁴: für C₁-C₄-Alkyl steht.

Die erfindungsgemäßen Flüssigfarbstoffpräparationen sind über einen langen Zeitraum auch bei höherer Temperatur stabil und zeigen beim Verdünnen mit Wasser, insbesondere mit hartem, d.h. Magnesium- und/oder Calcium-Ionen haltigem Wasser, insbesondere beim Verdünnen mit Wasser mit einer Gesamthärte (Konzentration an Erdalkalimetallionen pro Liter) von wenigstens 1,3 mmol/L, insbesondere wenigstens 2 mmol/L und speziell > 2,5 mmol/L (entsprechend einer Wasserhärte von wenigstens 7° dH, insbesondere wenigstens 11°dH und speziell wenigstens 14°dH) keine oder keine merklichen Ausfällungen. Bei der Oberflächenfärbung von Leder wie beispielsweise der Spritzfärbung führen wässrige Flotten, die durch Verdünnen der erfindungsgemäßen Flüssigfarbstoffpräparationen mit Wasser, insbesondere mit hartem Wasser einer Gesamtwasserhärte > 1,3 mmol/L, insbesondere > 2 mmol/L und speziell > 2,5 mmol/L hergestellt wurden, in geringerem Maße zu Bronziereffekten und/oder farbtieferen Färbungen als vergleichbare Flüssigfarbstoffpräparationen des Standes der Technik.

Dementsprechend betrifft die Erfindung auch die Verwendung der erfindungsgemäßen Flüssigfarbstoffpräparation zur Herstellung einer wässrigen Farbstoffflotte, insbesondere zur Herstellung einer wässrigen Färbeflotte durch Verdünnen mit hartem Wasser, d.h. Wasser mit einer Gesamthärte von von wenigstens 1,3 mmol/L, insbesondere wenigstens 2 mmol/L und speziell > 2,5 mmol/L.

Hier und im Folgenden steht der Begriff Alkyl (sowie entsprechende Gruppen in Alkoxy, Alkoxyalkyl, Alkylsulfonyl, Alkylaminosulfonyl, Dialkylaminosulfonyl und Alkylcarbonylamino) für einen linearen oder verzweigten aliphatischen Kohlenwasserstoffrest. Die Bezeichnung Cₙ-Cₘ gibt dabei die Anzahl der Kohlenstoffatome des jeweiligen Restes an. Dementsprechend stehen C₁-C₄-Alkyl und C₁-C₆-Alkyl für aliphatische Kohlenwasserstoffreste mit 1 bis 4 bzw. mit 1 bis 6 C-Atomen, z.B. für Methyl, Ethyl, n-Propyl, Isopropyl, n-Butyl, 2-Butyl, 2-Methylpropyl, tert.-Butyl, n-Pentyl, 2-Pentyl, 1,1-Dimethylpropyl, n-Hexyl, 2-Hexyl, 2-Methylpropan-2-yl und dergleichen.

In den Lösungsmitteln der Formel I steht R insbesondere für C₁-C₄-Alkyl. Die Variable k steht insbesondere für 2.

Beispiele für Lösungsmittel der Formel I sind 2-Methoxyethanol, 2-Ethoxyethanol, 2-Propoxyethanol, 2-Butoxyethanol, 2-Methoxypropan-1-ol, 1-Methoxypropan-2-ol, 2-Ethoxypropan-1-ol, 1-Ethoxypropan-2-ol, 2-Isopropoxypropan-1-ol, 1-Isopropoxypropan-2-ol, 2-Isobutoxypropan-1-ol, 1-Isopropoxypropan-2-ol, 2-(2-Methoxyethoxy)ethanol, 2-(2-Ethoxyethoxy)ethanol, 2-(2-Butoxyethoxy)ethanol (= C₄H₉-(O-CH₂CH₂)₂-OH), 2-[2-(Ethoxyethoxy)ethoxy)ethanol, 2-[2-(Butoxyethoxy)-ethoxy]ethanol, Dipropylenglykolmonomethylether (= CH₃-(O-C₃H₆)₂-OH) und Dipropylenglykolmonoethylether (= C₂H₅-(O-C₃H₆)₂-OH) sowie Gemische dieser Lösungsmittel. Beispiele für bevorzugte Lösungsmittel I sind Methoxypropanole wie 1-Methoxypropan-2-ol, 2-Methoxypropan-1-ol, 2-(2-Methoxyethoxy)ethanol, 2-(2-Ethoxyethoxy)ethanol, 2-(2-Butoxyethoxy)ethanol, Dipropylenglykolmonomethylether und Dipropylenglykolmonoethylether. Hierunter besonders bevorzugt sind Methoxypropanol, z.B. technisches 1-Methoxypropan-2-ol, 2-(2-Butoxyethoxy)ethanol und Dipropylenglykolmonomethylether.

Die in den erfindungsgemäßen Flüssigfarbstoffpräparationen enthaltenen Lösungsmittel der Formel I weisen bei 25°C eine Löslichkeit in Wasser von mehr als 100 g/l auf und sind vorzugsweise unter solchen Verbindungen ausgewählt, die bei dieser Temperatur mit Wasser vollständig mischbar sind.

Hier und im Folgenden sind alle Mengenangaben der Bestandteile der erfindungsgemäßen Flüssigfarbstoffpräparationen in Gewichtsprozent als Konzentrationsangaben zu verstehen, sofern nichts anderes angegeben ist. Das bedeutet, dass sich ihre Summe, bezogen auf alle Bestandteile der Flüssigfarbstoffpräparation, auf maximal 100 Gew.-% addiert, wobei geringe Fehlbeträge von 100 Gew.-% (in der Regel nicht mehr als 5 Gew.-% oder 1 Gew.-%) auf geringfügige Beimischungen anderer Bestandteile zurückzuführen sind, die nicht erfindungsrelevant sind.

In der Regel enthalten die erfindungsgemäßen Flüssigfarbstoffpräparationen das Lösungsmittel der Formel I in einer Menge von wenigstens 10 Gew.-%, häufig wenigstens 15 oder 18 Gew.-%, z.B. in einer Menge von 15 bis 80 Gew.-%, bzw. 18 bis 80 Gew.-%. Vorzugsweise enthalten die erfindungsgemäßen Flüssigfarbstoffpräparationen das Lösungsmittel der Formel I in einer Menge von 20 bis 80 Gew.-%, insbesondere 30 bis 70 Gew.% und speziell 40 bis 60 Gew.-%, bezogen auf das Gesamtgewicht der Flüssigfarbstoffpräparation.

Als wenigstens ein Sauerstoffatom aufweisendes organisches Lösungsmittel kommen grundsätzlich alle niedermolekularen organischen Substanzen, d.h. Substanzen mit einem Molekulargewicht ≤ 400 Dalton, häufig ≤ 300 Dalton und insbesondere ≤ 250 Dalton in Betracht, deren Löslichkeit in Wasser bei Raumtemperatur nicht mehr als 100 g/l, insbesondere nicht mehr als 90 g/l und speziell nicht mehr als 80 g/l beträgt, und die neben Kohlenstoff und Wasserstoff wenigstens 1, z.B. 1, 2 oder 3 Sauerstoffatom(e) aufweisen. Insbesondere handelt es sich um Verbindungen, die ausschließlich aus Wasserstoff, Sauerstoff und Kohlenstoff aufgebaut sind. Hierzu zählen insbesondere aliphatische und cyloaliphatische Verbindungen, die neben Wasserstoff aus 4 bis 25 C-Atomen, insbesondere 4 bis 20 C-Atomen, speziell 4 bis 15 C-Atomen und 1, 2 oder 3 Sauerstoffatomen aufgebaut sind. Die Sauerstoffatome können in Form von Ether-, Ester-, Hydroxyl- oder Ketogruppen vorliegen. Bei diesen Lösungsmitteln kann es sich um Reinstoffe oder um Gemische handeln. Bevorzugte Lösungsmittel dieser Art sind aus den folgenden Gruppen a) bis g) ausgewählt:
a) n-Butanol, Isobutanol, Alkanole mit wenigstens 5 C-Atomen, insbesondere 5 bis 16 C-Atomen und speziell 5 bis 14 C-Atomen wie Amylalkohol, Isoamylalkohol, Hexanole wie n-Hexanol, 2-Ethyl-1-butanol, 4-Methyl-2-pentanol, 2-Ethylhexanol, Isononanol, n-Nonanol, techn. Gemische isomerer Nonylalkohole, 2-Propylheptanol, Isotridecanol, technische Gemisch isomerer Isotridecanole, und dergleichen;
b) Cycloalkanole mit wenigstens 5 C-Atomen insbesondere mit 5 bis 12 C-Atomen wie Cyclopentanol, Cyclohexanol, Cycloheptanol, 2-, 3- und 4-Methylcyclohexanol, 3,3,5-Trimethylcyclohexanol und dergleichen;
c) aliphatische und cycloaliphatische Ketone mit wenigstens 5 C-Atomen, insbesondere mit 5 bis 12 C-Atomen wie Diethylketon, Methylpropylketon, Methylbutylketon, Methylisobutylketon, Cyclohexanon, Methylcyclohexanon, Dimethylcyclohexanon, 3,3,5-Trimethylcyclohexanon, Isophoron und dergleichen;
d) C₂-C₁₀-Alkylester und C₅-C₁₀-Cycloalkylester aliphatischer C₁-C₄-Carbonsäuren, insbesondere der Essigsäure wie Ethylacetat, n-Propylacetat, n-Butylacetat, Isobutylacetat, sec.-Butylacetat, n-Amylacetat, Isoamylacetat, Hexylacetat, 2-Ethylhexylacetat, Octylacetat, Nonylacetat, Cyclohexylacetat, 2-Butoxyethylacetat, sowie die entsprechenden Propionate und Butyrate;
e) Ester von Verbindungen I mit aliphatischen C₁-C₄-Carbonsäuren, insbesondere mit Essigsäure wie Butylglykolacetat und Butyldiglykolacetat;
f) Diole, insbesondere aliphatische Diole, mit wenigstens 6 C-Atomen insbesondere 8 bis 12 C-Atomen wie 2-Ethylhexan-1,3-diol und 2,4-Diethyloktandiol-1,5 sowie Gemische dieser Lösungmittel, beispielsweise technische Gemische wie höhersiedende Fraktionen der Hydroformylierung von Alkenen, wie Oxoöl 740 (CAS 68551-11-1, Hauptbestandteile 2-Ethylhexan-1,3-diol und n-Butanol) und Oxoöl 800 (CAS 68609-68-7, Hauptbestandteil 2,4-Diethyloktandiol-1,5);
g) Araliphatische Alkohole mit in der Regel 7 bis 10 C-Atomen, beispielsweise Phenyl-C₁-C₄-alkanole wie Benzylalkohol, 1- oder 2-Phenylethanol, 1-, 2- oder 3-Phenylpropanol oder 1-Methyl-1-phenylethanol und Phenoxy-C₂-C₄-alkanole wie 2-Phenoxyethanol, 2-Phenoxypropan-1-ol und 3-Phenoxypropan-1-ol.

Vorzugsweise enthalten die erfindungsgemäßen Flüssigfarbstoffpräparationen das zweite, wenigstens ein Sauerstoffatom aufweisende organische Lösungsmittel in einer Menge von 1 bis 80 Gew.-%, insbesondere 5 bis 70 Gew.-%, bezogen auf das Gesamtgewicht der Flüssigfarbstoffpräparation. Gemäß einer ersten Ausführungsform enthalten die erfindungsgemäßen Flüssigfarbstoffpräparationen das zweite, wenigstens ein Sauerstoffatom aufweisende organische Lösungsmittel in einer Menge von 1 bis 40 Gew.-%, insbesondere 5 bis 30 Gew.-% und speziell 10 bis 25 Gew.-%, bezogen auf das Gesamtgewicht der Flüssigfarbstoffpräparation. In dieser Ausführungsform ist das zweite Lösungsmittel insbesondere unter den vorgenannten Lösungsmitteln der Gruppen a) bis f) ausgewählt. Gemäß einer zweiten Ausführungsform enthalten die erfindungsgemäßen Flüssigfarbstoffpräparationen das zweite, wenigstens ein Sauerstoffatom aufweisende organische Lösungsmittel in einer Menge von 25 bis 80 Gew.-%, insbesondere 30 bis 75 Gew.-% und speziell 40 bis 70 Gew.-%, bezogen auf das Gesamtgewicht der Flüssigfarbstoffpräparation. In dieser Ausführungsform ist das zweite Lösungsmittel insbesondere unter den vorgenannten Lösungsmitteln der Gruppe g) ausgewählt.

Außerdem können die erfindungsgemäßen Flüssigfarbstoffpräparationen Wasser enthalten, wobei der Wasseranteil der Flüssigfarbstoffpräparation vorzugsweise 30 Gew.-% nicht überschreitet und beispielsweise 5 bis 30 Gew.-%, insbesondere 10 bis 20 Gew.-%, bezogen auf das Gesamtgewicht der Flüssigfarbstoffpräparation beträgt. In einer anderen Ausführungsform beträgt der Wassergehalt vorzugsweise nicht mehr als 5 Gew.-%, bezogen auf das Gesamtgewicht der Flüssigfarbstoffpräparation.

Die erfindungsgemäßen Flüssigfarbstoffpräparationen enthalten den Metallkomplexfarbstoff A in der Regel in einer Menge von 0,5 bis 30 Gew.-%, häufig 2 bis 30 Gew.-%, insbesondere 5 bis 20 Gew.-% und speziell 8 bis 15 Gew.-%, bezogen auf das Gesamtgewicht der Flüssigfarbstoffpräparation. Bei der Berechnung des Farbstoffanteils wird der Metallkomplex mit etwaigen Gegenionen unter Annahme eines vollständigen Umsatzes bei der Farbstoffherstellung zugrunde gelegt. Grundsätzlich kommt der erfindungsgemäße Vorteil auch bei geringen Farbstoffkonzentrationen, z.B. im Bereich von 0,5 bis 10 Gew.-%, häufig 1 bis 8 Gew.-% zum Tragen, insbesondere wenn es sich um farbintensive und/oder schwerlösliche Farbstoffe handelt, z.B. um die im Folgenden genannten Phthalocyanin-Metallkomplexe.

Als Farbstoffe A kommen erfindungsgemäß Kupferphthalocyanine, welche 2 bis 4 Substituenten tragen, die ausgewählt sind unter amidierten Sulfonylgruppen, und deren Mischungen sowie symmetrische und unsymmetrische 1:2-Metallkomplexe von Mono- oder Disazofarbstoffen und deren Mischungen, worin der freie Ligand des Metallkomplexfarbstoffs A durch die Formeln L1-H₂ oder L2-H₂ beschrieben wird, in Betracht, d.h. Metallkomplexfarbstoffe, die keine Sulfonsäuregruppen, bzw. anionische Sulfonatgruppen, aufweisen. Derartige Farbstoffe sind aufgrund des Fehlens löslichkeitsvermittelnder Sulfonsäuregruppen bzw. Sulfonatgruppen in Wasser schlecht oder gar nicht löslich. Herstellungsbedingt, können die in den Flüssigfarbstoffpräparationen verwendeten Farbstoffe A geringe Mengen, in der Regel jedoch nicht mehr als 10 Gew.-%, bezogen auf die Gesamtmenge an Farbstoff in der Präparation, an sulfonsäuregruppenhaltigen Farbstoffen enthalten, insbesondere wenn die Farbstoffe eine amidierte Sulfonsäuregruppe aufweisen. Bei den sulfonsäuregruppenhaltigen Farbstoffen handelt es sich typischerweise um in den Farbstoffen A enthaltene Verunreinigungen, die z.B. aus dem zur Herstellung des Farbstoffs A eingesetzten Ausgangsmaterial resultieren.

Die Metallkomplexfarbstoffe A können neutral oder geladen sein, wobei die Gesamtladung des Komplexes naturgemäß von der Ladung des Metallkations und des Ligandens abhängt und üblicherweise 0, -1 oder -2 ist, wobei sie im Falle Carboxylatsubstituierter Liganden bei hohen pH-Werten z.B. pH > 8, insbesondere > 9 auch -2 oder -3, abhängig von der Anzahl der Carboxylatgruppen, betragen kann. Die Metallkomplexfarbstoffe weisen dann aus Gründen der Elektroneutralität Kationen als Gegenionen auf. Bei den Gegenionen handelt es sich insbesondere um Alkalimetallionen, speziell um Natrium- oder Lithiumionen oder um Ammoniumionen wie NH₄⁺, Mono-, Di-, Tri- und Tetra-C₁-C₄-alkylammonium, Hydroxyethylammonium, Hydroxypropylammonium, Bis(hydroxyethyl)ammonium, Bis(hydroxypropyl)ammonium, Tris(hydroxyethyl)ammonium, Tris(hydroxypropyl)ammonium, Bis(hydroxyethyl)-C₁-C₄-alkylammonium und Bis(hydroxypropyl)-C₁-C₄-alkylammonium.

Bei den Metallkomplexfarbstoffen handelt es sich in der Regel um Komplexe von sulfonsäuregruppenfreien, chelatbildenden Farbstoffmolekülen, die ausgewählt sind unter Kupferphthalocyaninen, welche 2 bis 4 Substituenten tragen, die ausgewählt sind unter amidierten Sulfonylgruppen, und deren Mischungen sowie symmetrischen und unsymmetrischen 1:2 Metallkomplexen von Mono- und Disazofarbstoffen und deren Mischungen, worin der freie Ligand des Metallkomplexfarbstoffs A durch die Formeln L1-H₂ oder L2-H₂ beschrieben wird, mit Übergangsmetallen der Gruppen 6 bis 12 des Periodensystems, z.B. des Cu, Cr, Fe, Ni, Co, Mn, Zn oder Cd, insbesondere des Cr³⁺, Co³⁺ oder Fe³⁺. Geeignet sind auch Komplexe mit Cu²⁺. Das Molverhältnis von Übergangsmetall zu Farbstoffmolekül in diesen Metallkomplexen liegt üblicherweise im Bereich von 2:1 bis 1:2. In der Regel erfolgt in diesen Farbstoffen die Komplexierung der Metallionen über deprotonierte Hydroxylgruppen, deprotonierte Carboxylgruppen, deprotonierte Aminogruppen, deprotonierte Iminogruppen, über Stickstoffatome, die in ein aromatisches π-Elektronensystem eingebunden sind, oder über Azogruppen oder Azomethingruppen.

In einer bevorzugten Ausführungsform der Erfindung handelt es sich bei dem Farbstoff A um einen symmetrischen oder unsymmetrischen 1:2 Metallkomplex eines Mono- oder Disazofarbstoffs oder um Mischungen derartiger Farbstoffe. Ein Fachmann versteht hierunter Metallkomplexe von Chelatliganden aus der Gruppe ortho-ortho'-(o,o')-disubstituierter Monoazo- oder o,o'-disubstituierter Disazofarbstoffe mit mehrwertigen Metallkationen, z.B. 2-, 3- oder 4-wertigen Metallkationen, insbesondere von Übergangsmetallkationen, z.B. Cr³⁺, Co³⁺ oder Fe³⁺.

Im Falle symmetrischer Metallkomplexe können diese durch die allgemeine Formel [ML₂]^{k} bzw. im Falle unsymmetrischer Metallkomplexe durch die Formel [MLL']^{k} beschrieben werden, worin L und L' für Chelatliganden aus der Reihe o,o'-disubstituierter Monoazo- und Disazofarbstoffe stehen, die erfindungsgemäß unter L1-H₂ und L2-H₂ ausgewählt sind, M für ein mehrwertiges, z.B. 2-, 3- oder 4-wertiges Metallkation und insbesondere ein Übergangsmetallkation steht, z.B. Cr³⁺, Co³⁺ oder Fe³⁺, und k die Gesamtladung des Komplexes bedeutet und in der Regel -1 beträgt.

Erfindungsgemäß lassen sich die freien Liganden des Metallkomplexfarbstoffs A durch die Formeln L1-H₂ oder L2-H₂ beschreiben: 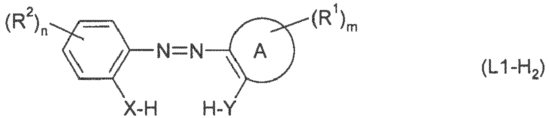 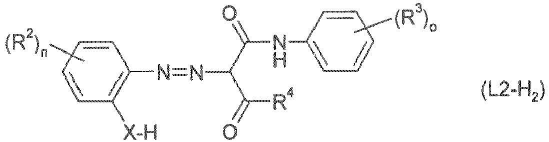 worin
- X-H und Y-H: unabhängig voneinander für OH, NH₂ oder COOH stehen, wobei X insbesondere OH oder COOH und Y insbesondere OH bedeuten;
- n, m und o: unabhängig voneinander für 0, 1, 2 oder 3 stehen;
- A: für einen unter Phenyl, Naphthyl, Pyridyl und Pyrazolyl ausgewählten aromatischen Rest steht und insbesondere unter Phenyl, 1-Naphthyl, 2-Naphthyl und 4-Pyrazolyl ausgewählt ist,
- R¹: unabhängig voneinander ausgewählt ist (sind) unter Halogen, Nitro, Cyano, OH, COOH, C₁-C₄-Alkyl, C₁-C₄-Alkoxy, C₁-C₄-Alkoxy-C₁-C₄-alkyl, C₁-C₄-Alkylsulfonyl, Aminosulfonyl, Mono- oder Di-C₁-C₄-alkylaminosulfonyl, C₁-C₄-Alkylsulfonylamino, C₁-C₄-Alkylcarbonylamino, Phenyl und Phenylsulfonylamino, wobei der Phenylrest der beiden letztgenannten Gruppen seinerseits 1, 2 oder 3 gleiche oder verschiedene Substituenten aufweisen kann, die unter Halogen, Nitro, Cyano, OH, COOH, C₁-C₄-Alkyl, C₁-C₄-Alkoxy, C₁-C₄-Alkoxy-C₁-C₄-alkyl, C₁-C₄-Alkylsulfonyl, Aminosulfonyl, Mono- oder Di-C₁-C₄-alkylaminosulfonyl und C₁-C₄-Alkylsulfonylamino ausgewählt sind, wobei einer der Reste R¹ auch für eine Gruppe N=N-Ph stehen kann, worin Ph für einen Phenylrest steht, der gegebenenfalls 1, 2 oder 3 gleiche oder verschiedene Substituenten aufweisen kann, die unter Halogen, Nitro, Cyano, OH, COOH, C₁-C₄-Alkyl, C₁-C₄-Alkoxy, C₁-C₄-Alkoxy-C₁-C₄-alkyl, C₁-C₄-Alkylsulfonyl, Aminosulfonyl, Mono- oder Di-C₁-C₄-alkylaminosulfonyl und C₁-C₄-Alkylsulfonylamino ausgewählt sind;
- R², R³: unabhängig voneinander ausgewählt sind unter Halogen, Nitro, Cyano, OH, COOH, NH₂, C₁-C₄-Alkyl, C₁-C₄-Alkoxy, C₁-C₄-Alkoxy-C₁-C₄-alkyl, C₁-C₄-Alkylsulfonyl, Aminosulfonyl, Mono- oder Di-C₁-C₄-alkylaminosulfonyl, C₁-C₄-Alkylcarbonylamino und C₁-C₄-Alkylsulfonylamino oder einer der Reste R² oder R³ auch für eine Gruppe N=N-Ph stehen kann, worin Ph für einen Phenylrest steht, der gegebenenfalls 1, 2 oder 3 gleiche oder verschiedene Substituenten aufweisen kann, die unter Halogen, Nitro, Cyano, OH, COOH, C₁-C₄-Alkyl, C₁-C₄-Alkoxy, C₁-C₄-Alkoxy-C₁-C₄-alkyl, C₁-C₄-Alkylsulfonyl, Aminosulfonyl, Mono- oder Di-C₁-C₄-alkylaminosulfonyl und C₁-C₄-Alkylsulfonylamino ausgewählt sind; und
- R⁴: für C₁-C₄-Alkyl, insbesondere für Methyl steht.

Insbesondere steht die Gruppe A(R¹)ₘ für Phenyl, Phenyl-N=N-Phenyl, 1-Naphthyl, 2-Naphthyl und 1-Phenyl-3-methylpyrazol-4-yl, wobei Phenyl, Naphthyl und die Phenylgruppen in Phenyl-3-methylpyrazol-4-yl und Phenyl-N=N-Phenyl 1 oder 2 der unter Halogen, Nitro, Cyano, OH, NH₂, C₁-C₄-Alkyl, C₁-C₄-Alkoxy, C₁-C₄-Alkoxy-C₁-C₄-alkyl, C₁-C₄-Alkylsulfonyl, Aminosulfonyl, Mono- oder Di-C₁-C₄-alkylaminosulfonyl, C₁-C₄-Alkylcarbonylamino und C₁-C₄-Alkylsulfonylamino ausgewählte Substituenten aufweisen können.

Die Variable n steht insbesondere für 0, 1 oder 2. Bevorzugte Substituenten R¹ umfassen Nitro, Chlor, Cyano, OH, C₁-C₄-Alkyl, C₁-C₄-Alkoxy, C₁-C₄-Alkylsulfonyl, Aminosulfonyl, Mono- oder Di-C₁-C₄-alkylaminosulfonyl, C₁-C₄-Alkylcarbonylamino und C₁-C₄-Alkylsulfonylamino.

Beispiele für Liganden der Formel L1-H₂ sind in die in Tabelle A genannten Verbindungen L1-H₂-1 bis L1-H₂-53.

**Tabelle A: Liganden der Formel L1-H₂:**

| L1-H₂ | (R²)ₙ | X-H | Y-H | A | (R¹)ₘ |
|---|---|---|---|---|---|
| 1 | 4-NO₂ | OH | OH | 1-Naphthyl | -- |
| 2 | 5-NO₂ | OH | OH | 1-Naphthyl | -- |
| 3 | 3-NO₂, 5-NO₂ | OH | OH | 1-Naphthyl | -- |
| 4 | 5-NO₂ | OH | OH | Pyrazol-4-yl | 1-Phenyl, 3-CH₃ |
| 5 | -- | CO₂H | OH | Pyrazol-4-yl | 1-Phenyl, 3-CH₃ |
| 3 | 5-SO₂-NH₂ | OH | OH | Pyrazol-4-yl | 1-Phenyl, 3-CH₃ |
| 4 | -- | CO₂H | OH | Pyrazol-4-yl | 1-(2-Chlorphenyl), 3-CH₃ |
| 5 | 5-SO₂-NH₂ | OH | OH | Pyrazol-4-yl | 1-(2,5-Dichlorphenyl), 3-CH₃ |
| 6 | 4-NO₂ | OH | OH | Phenyl | -- |
| 7 | 3-NO₂, 5-NO₂ | OH | OH | Phenyl | -- |
| 8 | 5-NO₂ | OH | OH | Phenyl | -- |
| 9 | -- | CO₂H | OH | Phenyl | -- |
| 10 | 5-SO₂-NH₂ | OH | OH | Phenyl | -- |
| 11 | 4-NO₂ | OH | OH | Pyrazol-4-yl | 1-Phenyl, 3-CH₃ |
| 12 | 5-(Ph-N=N)- | OH | OH | Pyrazol-4-yl | 1-Phenyl, 3-CH₃ |
| 13 | 5-SO₂-NH₂ | OH | OH | Phenyl | 5-(2-Chlor-4-nitrophenyl-N=N)- |
| 14 | 4-NO₂ | OH | OH | Pyrazol-4-yl | 1-Phenyl, 3-CH₃ |
| 15 | 3-NO₂; 5-Cl | OH | OH | Pyrazol-4-yl | 1-Phenyl, 3-CH₃ |
| 16 | 3-NO₂; 5-Cl | OH | OH | 1-Naphthyl | -- |
| 17 | 5-SO₂-NH₂ | OH | NH₂ | 1-Naphthyl | 8-OH |
| 18 | 5-NO₂ | OH | NH₂ | 1-Naphthyl | 8-OH |
| 19 | 5-SO₂-NHCH₃ | OH | OH | Pyrazol-4-yl | 1-Phenyl, 3-CH₃ |
| 20 | 5-SO₂-NHCH₃ | OH | OH | Phenyl | -- |
| 21 | 5-SO₂-NHCH₃ | OH | OH | 1-Naphthyl | -- |
| 22 | 5-SO₂-NH₂ | OH | OH | Phenyl | -- |
| 23 | 4-NO₂ | OH | NH₂ | 1-Naphthyl | 8-OH |
| 24 | 3-NO₂, 5-NO₂ | OH | NH₂ | 1-Naphthyl | 8-OH |
| 25 | 5-SO₂-NHCH₃ | OH | OH | Phenyl | -- |
| 26 | 5-(Ph-N=N)- | OH | OH | Pyrazol-4-yl | 1-(2-Chlorphenyl), 3-CH₃ |
| 27 | 5-(Ph-N=N)- | OH | OH | Pyrazol-4-yl | 1-(2,5-Dichlorphenyl), 3-CH₃ |
| 28 | 5-(Ph-N=N)- | OH | OH | Phenyl | -- |
| 29 | 5-(Ph-N=N)- | OH | OH | 1-Naphthyl | -- |
| 30 | 4-NO₂ | OH | OH | 2-Naphthyl | -- |
| 31 | 5-NO₂ | OH | OH | 2-Naphthyl | -- |
| 32 | 3-NO₂, 5-NO₂ | OH | OH | 2-Naphthyl | -- |
| 33 | -- | CO₂H | OH | 2-Naphthyl | -- |
| 34 | 5-SO₂-NH₂ | OH | OH | 2-Naphthyl | -- |
| 35 | 5-SO₂-NHCH₃ | OH | OH | 2-Naphthyl | -- |
| 36 | 4-NO₂ | OH | OH | 2-Naphthyl | 5-Cl, 8-Cl |
| 37 | 5-NO₂ | OH | OH | 2-Naphthyl | 5-CL, 8-Cl |
| 38 | 3-NO₂, 5-NO₂ | OH | OH | 2-Naphthyl | 5-Cl, 8-Cl |
| 39 | -- | CO₂H | OH | 2-Naphthyl | 5-Cl, 8-Cl |
| 40 | 5-SO₂-NH₂ | OH | OH | 2-Naphthyl | 5-Cl, 8-Cl |
| 41 | 5-SO₂-NHCH₃ | OH | OH | 2-Naphthyl | 5-Cl, 8-Cl |
| 42 | 5-Cl | OH | OH | Phenyl | -- |
| 43 | 5-Cl | OH | OH | Pyrazol-4-yl | 1-(2-Chlorphenyl), 3-CH₃ |
| 44 | 5-Cl | OH | OH | Pyrazol-4-yl | 1-(2,5-Dichlorphenyl), 3-CH₃ |
| 45 | 5-Cl | OH | OH | Pyrazol-4-yl | 1-Phenyl, 3-CH₃ |
| 46 | 5-Cl | OH | OH | 1-Naphthyl | -- |
| 47 | 5-NO₂ | OH | OH | 1-Naphthyl | 8-(NH-SO₂-CH₃) |
| 48 | 5-NO₂ | OH | OH | 1-Naphthyl | 8-(NH-CO-CH₃) |
| 49 | 5-NO₂ | OH | OH | Phenyl | 5-(2-Chlor-4-nitrophenyl-N=N)- |
| 50 | 5-(2-OCH₃-Ph- N=N)- | OH | OH | 1-Naphthyl | -- |
| 51 | 5-SO₂-NH₂ | OH | OH | 1-Naphthyl | -- |
| 52 | 5-SO₂-NH₂ | OH | OH | 1-Naphthyl | 8-(NH-SO₂-CH₃) |
| 53 | 5-SO₂-NH₂ | OH | OH | 1-Naphthyl | 8-(NH-CO-CH₃) |

Beispiele für Liganden der Formel L2-H₂ sind in die in Tabelle B genannten Verbindungen L2-H₂-1 bis L2-H₂-20.

**Tabelle B: Liganden der Formel L2-H₂:**

| L2-H₂ | (R²)ₙ | X-H | R⁴ | (R³)ₒ |
|---|---|---|---|---|
| 1 | 4-NO₂ | OH | CH₃ | -- |
| 2 | 5-NO₂ | OH | CH₃ | -- |
| 3 | 3-NO₂, 5-NO₂ | OH | CH₃ | -- |
| 4 | 5-NO₂ | OH | CH₃ | -- |
| 5 | -- | CO₂H | CH₃ | -- |
| 6 | 5-SO₂-NH₂ | OH | CH₃ | -- |
| 7 | 5-(Ph-N=N)- | OH | CH₃ | -- |
| 8 | 5-SO₂-NHCH₃ | OH | CH₃ | -- |
| 9 | 5-Cl | OH | CH₃ | -- |
| 10 | 5-(SO₂-NH-(2-CO₂H-Phenyl) | OH | CH₃ | -- |
| 11 | 4-NO₂ | OH | CH₃ | 2-Cl |
| 12 | 5-NO₂ | OH | CH₃ | 2-Cl |
| 13 | 3-NO₂, 5-NO₂ | OH | CH₃ | 2-Cl |
| 14 | 5-NO₂ | OH | CH₃ | 2-Cl |
| 15 | -- | CO₂H | CH₃ | 2-Cl |
| 16 | 5-SO₂-NH₂ | OH | CH₃ | 2-Cl |
| 17 | 5-(Ph-N=N)- | OH | CH₃ | 2-Cl |
| 18 | 5-SO₂-NHCH₃ | OH | CH₃ | 2-Cl |
| 19 | 5-Cl | OH | CH₃ | 2-Cl |
| 20 | 5-(SO₂-NH-(2-CO₂H-Phenyl) | OH | CH₃ | 2-Cl |

Beispiele für erfindungsgemäß bevorzugte 1:2-Metallkomplexe sind insbesondere die symmetrischen Komplexe der Formel [(L1)₂Cr]¹⁻ und [(L1)₂Co]¹⁻, worin L1 für einen Liganden steht, der von den in Tabelle A genannten freien Liganden L1-H₂.1 bis L1-H₂.53 abgeleitet ist.

Beispiele für erfindungsgemäß bevorzugte 1:2-Metallkomplexe sind insbesondere auch die unsymmetrischen Komplexe der Formel [(L1)(L1')Cr]¹⁻ und [(L1)(L1')Co]¹⁻, worin L1 und L1' für zwei verschiedene Liganden stehen, die von den in Tabelle A genannten freien Liganden L1-H₂. 1 bis L1-H₂.53 abgeleitet sind.

Beispiele für erfindungsgemäß bevorzugte 1:2-Metallkomplexe sind insbesondere auch die unsymmetrischen Komplexe der Formel [(L1)(L2)Cr]¹⁻ und [(L1)(L2)Co]¹⁻, worin L1 für einen Liganden steht, der von einem in Tabelle A genannten freien Liganden L1-H₂.1 bis L1-H₂.53 abgeleitet ist, und L2 für einen Liganden steht, der von einem in Tabelle B genannten freien Liganden L2-H₂.1 bis L2-H₂.20 abgeleitet ist.

Die Metallkomplexfarbstoffe A sind bekannt oder können in Analogie zu bekannten Methoden des Standes der Technik hergestellt werden. Metallkomplexe von Mono- und Disazofarbstoffen und ihre Herstellung werden beispielsweise in DE-A 26 33 154, DE 28 02 326, EP-A 19 152, EP-A 24 609 und EP-A 524 520 beschrieben.

Gemäß einer zweiten bevorzugten Ausführungsform der Erfindung handelt es sich bei dem Farbstoff A um einen Metallkomplex eines sulfonsäuregruppenfreien Kupferphthalocyanins, welches 2 bis 4 Substituenten trägt, die ausgewählt sind unter amidierten Sulfonylgruppen, oder um Mischungen von sulfonsäuregruppenfreien Kupferphthalocyaninen, welche 2 bis 4 Substituenten tragen, die ausgewählt sind unter amidierten Sulfonylgruppen, mit anderen sulfonsäuregruppenfreien Metallkomplexfarbstoffen. Zur Verbesserung ihrer Löslichkeit weisen diese Phthalocyanin-Metallkomplexe erfindungsgemäß 2 bis 4 Substituenten an den Kohlenstoffatomen des Phthalocyanin-Liganden auf. Erfindungsemäß handelt es sich bei dem Phthalocyanin-Metallkomplex um ein Kupferphtalocyanin, das 2 bis 4 Substituenten trägt, die unter amidierten Sulfonylgruppen, insbesondere unter Mono- oder Di-C₁-C₁₀-alkylaminosulfonyl, wie N-(n-Butyl)aminosulfonyl oder N-(2-ethylhexyl)aminosulfonyl, Mono- oder Bis-((di-C₁-C₄-alkylamino)-C₁-C₄-alkyl)aminosulfonyl wie N-(3-(Dimethylamino)propyl)aminosulfonyl, Mono- oder Bis-(C₁-C₁₀-alkyloxy-C₁-C₄-alkyl)aminosulfonyl wie N-(3-(Isopropyloxy)propyl)aminoseulfonyl, N-(3-(2-Ethylhexyloxy)propyl)aminosulfonyl, N-(2-(Isopropyloxy)propyl)aminoseulfonyl oder N-(2-(2-Ethylhexyl)propyl)aminosulfonyl, etc. ausgewählt sind. Beispiele sind insbesondere Kupferphthalocyanin, das 2 N-(n-Butyl)aminosulfonyl und 2 N-(2-Ethylhexyl)aminosulfonylgruppen aufweist, Kupferphthalocyanin, das 3 N-(3-(2-Ethylhexyloxy)propyl)aminosulfonylgruppen aufweist, Kupferphthalocyanin, das 4 N-(3-(2-Ethylhexyloxy)propyl)aminosulfonylgruppen aufweist, Kupferphthalocyanin, das 4 N-(3-(Isopropyloxy)propyl)aminosulfonylgruppen aufweist, Kupferphthalocyanin, das 3 N-(3-(Dimethylamino)propyl)-aminosulfonylgruppen aufweist.

Die erfindungsgemäßen Flüssigfarbstoffpräparationen zeichnen sich durch eine verbesserte Stabilität beim Verdünnen mit Wasser und insbesondere mit hartem Wasser aus. Sie eignen sich daher in besonderem Maße zur Herstellung wässriger Färbeflotten, da bei der Herstellung der Flotte durch Verdünnen der erfindungsgemäßen Flüssigfarbstoffpräparationen mit Wasser die Härte des zum Verdünnen verwendeten Wassers weniger problematisch ist als bei den Flüssigfarbstoffpräparationen des Standes der Technik.

Die erfindungsgemäßen Flüssigfarbstoffpräparationen können prinzipiell zur Herstellung beliebiger wässriger Färbeflotten verwendet werden. Die erfindungsgemäßen Vorteile kommen allerdings insbesondere bei der Oberflächenfärbung von Leder und speziell bei der Spritzfärbung von Leder zum Tragen, da aufgrund der verbesserten Hartwasserstabilität die Bildung unlöslicher Bestandteile in der wässrigen Flotte verringert ist, so dass Bronziereffekte vermindert oder gar vermieden werden und farbstarke O-berflächenfärbungen möglich sind. Dementsprechend betrifft eine bevorzugte Ausführungsform der Erfindung die Verwendung erfindungsgemäßer Flüssigfarbstoffpräparationen zur Herstellung einer wässrigen Flotte für die Oberflächenfärbung und insbesondere für die Spritzfärbung von Leder.

Die Erfindung betrifft weiterhin ein Verfahren zum Färben von Substraten, insbesondere von Leder, und speziell ein Verfahren zur Oberflächenfärbung von Leder durch Applikation einer wässrigen Färbeflotte, die durch Verdünnen einer erfindungsgemäßen Flüssigfarbstoffformulierung mit Wasser, speziell mit hartem Wasser hergestellt wurde. In einer besonders bevorzugten Ausführungsform betrifft die Erfindung ein Verfahren zur Oberflächenfärbung von Leder durch Spritzapplikation einer so hergestellten Färbeflotte.

Färbeverfahren für Leder und andere Substrate unter Verwendung wässriger Färbeflotten sind dem Fachmann hinreichend bekannt, für Leder z.B. aus "Bibliothek des Leders" Band 5 (Das Färben von Leder) [1987] Umschau Verlag; "Leather Technicians Handbook", 1983, von J. H. Sharphouse, publiziert von Leather Producers Association; und "Fundamentals of Leather Manufacturing", 1993, von E. Heidemann, publiziert von Eduard Roether KG.

Die wässrigen Färbeflotten können abhängig von der Applikationsart und dem zu färbenden Substrat übliche Hilfsmittel, im Falle der Lederfärbung z.B. Mittel zur Einstellung des pH-Wertes, Fettungsmittel, Gerbstoffe, Nachgerbstoffe, Hydrophobiermittel, Fixiermittel, Penetrationsmittel und Bindemittel in den hierfür üblichen Mengen enthalten. Im Falle der erfindungsgemäß bevorzugten Oberflächenfärbung kann die wässrige Färbeflotte (Spritzbrühe) typischerweise neben den vorgenannten Farbstoffen und Lösungsmitteln weitere Bestandteile enthalten. Hierzu zählen weitere mit Wasser mischbare Lösungsmittel, Mittel zur Einstellung des pH-Wertes, z.B. organische Säure und/oder Basen, weiterhin Penetrationshilfsmittel, Hydrophobiermittel, Bindemittel aus nativen oder synthetischen, wasserlöslichen oder wasserunlöslichen Polymeren sowie reaktive Vernetzer enthalten. Außerdem können sie gegebenenfalls Fettungsmittel, Nachgerbstoffe und/oder kationische Fixiermittel enthalten. Der Anteil derartiger Hilfsstoffe in der Flotte kann ein Mehrfaches des Farbstoffs betragen.

Mit dem erfindungsgemäßen Verfahren können grundsätzlich alle Ledertypen, d.h. nicht nachgegerbte Halbfertigprodukte wie Metalloxid-gegerbtes Leder (wet-blue bei Chromoxid-Gerbung und wet-white bei Aluminiumoxid-Gerbung) und organisch, z.B. Aldehyd-gegerbtes Leder (wet-white) bzw. pflanzlich gegerbtes Leder, sowie nachgegerbte Halbfertigprodukte wie Borke oder Crustleder gefärbt werden.

Die Färbung erfolgt in den für die Applikationsart üblichen Vorrichtungen und Apparaturen, im Falle der Spritzfärbung beispielsweise im Hand- oder Anlagenbetrieb mittels Zerstäubervorrichtungen für Flüssigkeiten, z.B. mittels druckluftzerstäubenden Spritzpistolen (air atomizing), HVLP-Pistolen (high volume low pressure) oder mittels Vorrichtungen zur Airless-Zerstäubung. Die Applikation erfolgt üblicherweise bei Temperaturen im Bereich der Umgebungstemperatur, z.B. von 10 bis 50 °C. Anschließend wird man in der Regel eine Trocknung durchführen, z.B. bei Temperaturen im Bereich von 60 bis 140°C.

Die erfindungsgemäßen Flüssigfarbstoffpräparationen, insbesondere solche mit einem geringen Wassergehalt eignen sich außerdem in vorteilhafter Weise zur Herstellung von Lackformulierungen, insbesondere zur Herstellung lösungsmittelbasierter Lackformulierungen.

Die folgenden Beispiele und Vergleichsbeispiele dienen der weiteren Erläuterung der Erfindung.

Farbstoffe:
Farbstoff A: Mischung symmetrischer und unsymmetrischer 1:2 Chromkomplexe des Liganden L1-H₂.1 und L1-H₂.2 aus Tabelle A, hergestellt analog DE 2918634 durch Diazotierung einer Mischung von 2-Amino-5-nitrophenol und 2-Amino-4-nitrophenol, Kuppeln auf ß-Naphthol und anschließendes Chromieren mit Chrom-III-salzen. Lösung in Butyldiglykol (2-(2-Butoxyethoxy)ethanol).
Farbstoff B: Symmetrischer 1:2 Cobaltkomplex des Liganden L1-H₂.2 aus Tabelle A, hergestellt analog DE 2918634 durch Diazotierung von 2-Amino-5-nitrophenol, Kuppeln auf ß-Naphthol und anschließendes Metallieren mit CoCl₂ x 6 H₂O. Lösung in Butyldiglykol oder Dipropylenglykolmonomethylether.
Farbstoff C: Unsymmetrischer 1:2 Chromkomplex der Liganden L1-H₂.5 und L1 -H₂.11 aus Tabelle 1, hergestellt analog DE 2918634 durch Diazotierung einer Mischung von 2-Amino-5-nitrophenol mit Anthranilsäure (Molverhältnis 1:1), Kuppeln auf ß-Naphthol und anschließendes Chromieren mit Chrom-III-Salzen. Lösung in Butyldiglykol oder Dipropylenglykol-monomethylether.
Farbstoff D: handelsübliches Tris-(3-dimethylaminopropyl)amid der Kupferphthalocyanintrisulfonsäure

### I. Flüssigfarbstoffpräparationen:

### 1.1 Flüssigfarbstoffpräparationen des Farbstoffs A

Die Lösung des Farbstoffs A in Butyldiglykol wird mit dem jeweiligen Lösungsmittel bzw. -Gemisch gemäß Tabelle 1, vollentsalztem Wasser und gegebenenfalls 20%iger wässriger Natronlauge auf eine übliche, lagerstabile Konzentration und einen pH-Wert von etwa 8 eingestellt.

### 1.2 Flüssigfarbstoffpräparationen des Farbstoffs B

Die Lösung des Farbstoffs B in Butyldiglykol oder in Dipropylenglykolmonomethylether wird mit dem jeweiligen Lösungsmittel bzw. -Gemisch gemäß Tabelle 1, vollentsalztem Wasser und gegebenenfalls 20%iger wässriger Natronlauge auf eine übliche, lagerstabile Konzentration und einen pH-Wert von etwa 8 eingestellt.

### 1.3 Flüssigfarbstoffpräparationen des Farbstoffs C

Die Lösung des Farbstoffs C in Butyldiglykol oder in Dipropylenglykolmonomethylether wird mit dem jeweiligen Lösungsmittel bzw. -Gemisch gemäß Tabelle 1, vollentsalztem Wasser und gegebenenfalls 20%iger wässriger Natronlauge auf eine übliche, lagerstabile Konzentration und einen pH-Wert von etwa 8 eingestellt.

**Tabelle 1:**

| Beispiel | Farbstoff | | Lösungsmittel I | | Lösungsmittel | | Wasser |
|---|---|---|---|---|---|---|---|
| | Typ | [%] | Typ | [%] | Typ | [%] | [%] |
| V1⁵⁾ | A | 12 | BDG | 35 | PM+NMP 3:1 ¹⁾ | 40 | 13 |
| V2 | A | 12 | BDG | 75 | -- | -- | 13 |
| 1 | A | 12 | BDG | 55 | 2-Propylheptanol | 20 | 20 |
| 2 | A | 12 | BDG | 55 | Tridecanol | 20 | 20 |
| 3 | A | 12 | BDG | 55 | 2-Ethylhexylacetat | 20 | 20 |
| 4 | A | 12 | BDG | 55 | Nonanol N²⁾ | 20 | 20 |
| 5 | A | 12 | BDG | 55 | 2-Ethylhexanol | 20 | 20 |
| 6 | A | 12 | BDG | 55 | n-Butanol | 20 | 20 |
| 7 | A | 12 | BDG | 55 | iso-Butanol | 20 | 20 |
| 8 | A | 12 | BDG | 55 | iso-Butylacetat | 20 | 20 |
| 9 | A | 12 | BDG | 55 | Cyclohexanon | 20 | 20 |
| 10 | A | 12 | BDG | 55 | Butylglykolacetat ³⁾ | 20 | 20 |
| 11 | A | 12 | BDG | 55 | Butyldiglykolacetat ⁴⁾ | 20 | 20 |
| V3 | A | 12 | BDG | 35 | PM +NMP 3:1 ¹⁾ | 40 | 20 |
| V4 | A | 12 | BDG | 68 | -- | -- | 20 |
| V5 | A | 12 | BDG | 48 | Butylglykol | 20 | 20 |
| V6 | A | 12 | BDG | 48 | NMP | 20 | 20 |
| V7 | A | 12 | BDG | 48 | PC | 20 | 20 |
| V8 | A | 12 | BDG | 48 | PC + EC 1:1 ¹⁾ | 20 | 20 |
| 12 | A | 12 | BDG | 48 | Oxoöl 740 | 20 | 20 |
| 13 | A | 12 | BDG | 48 | Oxoöl 800 | 20 | 20 |
| V9 | A | 12 | BDG | 75 | -- | -- | 13 |
| V10 | A | 9 | BDG | 56 | Diacetonalkohol | 25 | 10 |
| 14 | A | 9 | BDG | 56 | 2-Propylheptanol | 25 | 10 |
| 15 | A | 9 | BDG | 56 | 2-Ethylhexylacetat | 25 | 10 |
| 16 | A | 9 | BDG | 56 | n-Butylacetat | 25 | 10 |
| 17 | A | 9 | BDG | 56 | 2-Ethylhexanol | 25 | 10 |
| V11 | A | 9 | BDG | 27 | PM+NMP+DAA 22:7:25 ¹⁾ | 54 | 10 |
| V12 | B | 12 | BDG | 75 | -- | -- | 13 |
| V13 | B | 9 | BDG | 56 | Diacetonalkohol | 25 | 10 |
| 18 | B | 9 | BDG | 56 | 2-Propylheptanol | 25 | 10 |
| 19 | B | 9 | BDG | 56 | n-Butylacetat | 25 | 10 |
| 20 | B | 9 | BDG | 56 | 2-Ethylhexanol | 25 | 10 |
| V14 | B | 9 | BDG | 75 | -- | -- | 13 |
| V15 | B | 9 | DPM | 75 | -- | -- | 13 |
| 21 | B | 9 | DPM | 56 | n-Butylacetat | 25 | 10 |
| 22 | B | 9 | DPM | 56 | 2-Ethylhexanol | 25 | 10 |
| V16 | C | 14 | BDG | 73 | -- | -- | 13 |
| V17 | C | 14 | DPM | 73 | -- | -- | 13 |
| 23 | C | 10,5 | DPM | 54,5 | n-Butylacetat | 25 | 10 |
| 24 | C | 10,5 | DPM | 54,5 | 2-Ethylhexanol | 25 | 10 |

| | | | | | | | |
|---|---|---|---|---|---|---|---|
| 1) Gewichtsverhältnis 2) Nonanol N: Gemisch isomerer primärer Nonylalkohole (CAS Reg.-Nr. 68515-81-1) 3) Essigsäureester des 2-Butoxyethanols 4) Essigsäureester des 2-(2-Butoxyethoxy)ethanols 5) V = Vergleichsbeispiel | | | | | | | |

Abkürzungen:
PM: 1-Methoxypropanol-2
NMP: N-Methylpyrrolidon
DAA: Diacetonalkohol (= 2-Oxo-4-hydroxy-4-methylpentan)
BDG: Butyldiglykol
DPM: Dipropylenglykolmonomethylether
PC: Propylencarbonat
EC: Ethylencarbonat

### 1.4 Flüssigfarbstoffpräparationen des Farbstoffs D

Die Lösung des Farbstoffs D in dem in Tabelle 2 angegebenen Lösungsmittel I wird mit dem jeweiligen Lösungsmittel bzw. -Gemisch II gemäß Tabelle 2 und ggf. vollentsalztem Wasser versetzt. In den Beispielen V19 und 25 bis 29 resultiert das Wasser aus den eingesetzten Lösungmitteln. Alle %-Angaben in Tabelle 2 sind Gew.-%.

**Tabelle 2**

| Beispiel | Farbstoff | | Lösungsmittel I | | Lösungsmittel | | Wasser |
|---|---|---|---|---|---|---|---|
| | Typ | % | Typ | % | Typ | % | % |
| V18 | D | 3 | PM | 75 | Essigsäure | 0,5 | 21,5 |
| V19 | D | 3 | Ethylenglykol | 95,8 | | | 1,2 |
| 25 | D | 1,5 | BDG | 50 | BzOH | 48 | 0,5 |
| 26 | D | 1,5 | BDG | 50 | PhO-EO-H | 48 | 0,5 |
| 27 | D | 2 | BDG | 33,3 | BzOH | 64 | 0,67 |
| 28 | D | 2 | BDG | 33,3 | PhO-EO-H | 64 | 0,67 |
| 29 | D | 1,5 | BDG/Tri-EG 1:1 | 50 | PhO-EO-H | 48 | 0,5 |

| | | | | | | | |
|---|---|---|---|---|---|---|---|
| PM: 1-Methoxypropanol-2 BDG: Butyldiglykol EG: Ethylenglykol Tri-EG: Triethylenglykol Bz-OH: Benzylalkohol PhO-EO-H: 2-Phenoxyethanol | | | | | | | |

### II. Applikationsbeispiele

Ausgehend von den Stammlösungen werden Spritzmischungen nach folgenden Rezepturen hergestellt:
A
   75 Tle Stammlösung
   325 Tle 1-Methoxypropanol-2 (techn.)
   600 Tle VE-Wasser, nach üblichen Methoden vollentsalzt
B
   100 Tle Stammlösung
   200 Tle 1-Methoxypropanol-2 (techn.)
   700 Tle hartes Wasser

Das harte Wasser wird hergestellt durch Auflösen von 260,0 mg CaCl₂ x 6 H₂O und 145,4 mg MgSO₄ x 7 H₂O in destilliertem Wasser zu 100 ml Lösung und Verdünnen mit destilliertem Wasser auf 500 ml Lösung.

Es wird betriebsübliches, ungefärbtes Chrom-Rindleder zur Spritzfärbung verwendet und mit Hilfe üblicher Spritzpistolen appliziert und zwar jeweils ca. 4,5 g Spritzflotte pro DINA6 Lederstück. Das Leder wird bei Raumtemperatur getrocknet und erst nach vollständiger Trocknung (nach mind. 1 Tag) bewertet, bzw. farbmetrisch vermessen.

Die Bewertung nach "Bronziereffekt" erfolgt visuell:
Note
   5 = kein
   4 = schwach
   3 = mäßig
   2 = mittel
   1 = stark

Die Bewertung des Färbe-Effektes (Farbstärke der Färbung) erfolgt mit Hilfe der Helligkeitsdifferenz L*, bzw. dL* (CIELAB-System) nach DIN 6174:1979-01 im Vergleich zu einer Referenzprobe: - je kleiner (dL* negativ zu einer Vergleichsfärbung) der Wert, desto intensiver, tiefer die Färbung.

Aus der für Methode A und Methode B jeweils erzielten Farbstärken und Bronziereffekten werden für jede Flüssigfarbstoffpräparation Vorteilspunkte VP ermittelt. Hierzu geht man so vor, dass man je Serie jeweils wenigstens 2 Vergleichsfärbungen mit nichterfindungsgemäßen Farbstoffpräparationen durchführt. Der jeweils schlechteste Wert einer Serie (geringste Farbtiefe, stärkstes Bronzieren) erhält jeweils den Wert "0". Eine merkliche Verbesserung in einer Eigenschaft zählt 1 Vorteilspunkt, eine deutliche Verbesserung 2 Vorteilspunkte. Anschließend werden die Vorteilspunkte der Probe über alle bewerteten Eigenschaften summiert.

Die Ergebnisse der Färbungen sind in Tabelle 3 zusammengestellt.

**Tabelle 3**

| Flüssigfarbstoffformulierung aus Beispiel | Applikation A | | Applikation B | | VP |
|---|---|---|---|---|---|
| | Bronziereff. | dL | Bronziereff. | dL | |
| V1 (ref) | 5 | 0,0 | 4 | 0 | 1 |
| V2 | 5 | 6,1 | 5 | 2,6 | 2 |
| 1 | 5 | -1,0 | 5 | -5,4 | 6 |
| 2 | 5 | -1,3 | 5 | -4,8 | 6 |
| 3 | 5 | -0,7 | 5 | -3,5 | 6 |
| 4 | 5 | 3,3 | 5 | -6,8 | 5 |
| 5 | 5 | 3,0 | 5 | -5,9 | 5 |
| 6 | 5 | -0,6 | 5 | -1,9 | 6 |
| 7 | 5 | 0,1 | 5 | -2,6 | 5 |
| 8 | 5 | -0,4 | 3 | -1,6 | 4 |
| 9 | 5 | 1,7 | 5 | -2,5 | 5 |
| 10 | 5 | 4,4 | 5 | -3,3 | 5 |
| 11 | 5 | 5,9 | 5 | 1,2 | 4 |
| | | | | | |
| V3 (ref) | 5 | 0 | 3 | 0 | 0 |
| V4 | 5 | 1,8 | 5 | -0,8 | 4 |
| V5 | 5 | 5,2 | 5 | -1,0 | 4 |
| V6 | 5 | 3,1 | 3 | -0,7 | 2 |
| V7 | 5 | 1,7 | 3 | -0,4 | 2 |
| V8 | 5 | 3,1 | 5 | -1,4 | 4 |
| 12 | 5 | 3,9 | 5 | -0,3 | 4 |
| 13 | 5 | 6,8 | 5 | -1,1 | 4 |
| | | | | | |
| V9 | 5 | 0 | 5 | 0 | 2 |
| V10 | 5 | -0,2 | 4,5 | -1,4 | 4 |
| 14 | 5 | -1,5 | 5 | -4,0 | 6 |
| 15 | 5 | -3,0 | 5 | -1,2 | 6 |
| 16 | 5 | -4,7 | 4,5 | -4,0 | 6 |
| 17 | 5 | -3,4 | 5 | -3,6 | 6 |
| V11 | 5 | -6,0 | 1 | 4,9 | 2 |
| | | | | | |
| V12 | 5 | 0 | 1 | 0 | 2 |
| V13 | 5 | 1,8 | 2 | 2,2 | 0 |
| 18 | 5 | 2,8 | 3 | 0,4 | 2 |
| 19 | 5 | -1,6 | 4 | -2,4 | 6 |
| 20 | 5 | 3,8 | 4 | -5,5 | 4 |
| | | | | | |
| V14 | 5 | 0 | 2 | 0 | 2 |
| V15 | 5 | -3,6 | 1 | 1,5 | 2 |
| 21 | 5 | -3,7 | 3 | -0,9 | 5 |
| 22 | 5 | -1,7 | 3 | 0,7 | 3 |
| | | | | | |
| V16 | | 0 | | 0 | 0 |
| V17 | | -1,9 | | -2,8 | 4 |
| 23 | | -1,5 | | -2,1 | 4 |
| 24 | | 2,1 | | -5,6 | 2 |

Ausgehend von den Flüssigfarbstoffformulierung der Beispiele V18, V19 und 25 bis 29 wurden die folgenden Lacke C bzw. Spritzbrühen D hergestellt:
Lack C:
   1,25 g Farbstofflösung
   3,75 g Isobutylacetat
   10,0 g Corial Glanzlack AW
Spritzbrühe D:
   1g Farbstofflösung
   4,6 g Solvenon PM
   8,4 g VE-Wasser
   werden gemischt und mit einer Spritzpistole auf ungefärbtes Crustleder gespritzt und getrocknet

Zur Untersuchung der Lackeigenschaften wurde Lack C mit einem Erichsen-Ausziehgerät mit 200µm Spaltbreite auf weißen Kunstdruckkarton aufgezogen und getrocknet. Die Verträglichkeit der Farbstofflösung mit der Lackformulierung ist in Tabelle 4 zusammengestellt und wurde visuell aufgrund des Erscheinungsbildes der lackierte Fläche bewertet.

In Analogie zu der oben beschriebenen Methode werden die Spritzbrühen D mit Hilfe üblicher Spritzpistolen auf betriebsübliches, ungefärbtes Crustleder appliziert und zwar jeweils ca. 4,5 g Spritzflotte pro DINA6 Lederstück. Das Leder wird bei Raumtemperatur getrocknet und erst nach vollständiger Trocknung (nach mind. 1 Tag) visuell aufgrund des Erscheinungsbildes des gefärbten Leders bewertet. Die Ergebnisse sind in Tabelle 4 zusammengestellt.

Die Beurteilung erfolgte jeweils nach folgender Skala
-- starke Unverträglichkeit
- unverträglich, Applikation unbrauchbar
0 Applikation brauchbar, sichtbare Fehler
+ Applikation gut, kaum sichtbare Fehler
++ Applikation sehr gut, keine sichtbaren Fehler

**Tabelle 4:**

| Flüssigfarbstoffformulierung aus Beispiel | Anwendungsergebnis (Verträglichkeit) | |
|---|---|---|
| | im Lack | auf Leder |
| V18 | - - | ++ |
| V19 | - - | - - |
| 25 | 0 | + |
| 26 | 0 | + |
| 27 | 0 | + |
| 28 | 0 | + |
| 29 | ++ | ++ |

## Patentansprüche

1. Flüssigfarbstoffpräparationen eines Metallkomplexfarbstoffs A, der keine Sulfosäuregruppen aufweist, umfassend wenigstens einen organischen Metallkomplexfarbstoff und ein Gemisch organischer Lösungsmittel sowie gegebenenfalls Wasser, wobei das Gemisch organischer Lösungsmittel im Wesentlichen
i) wenigstens ein erstes Lösungsmittel der allgemeinen Formel I
R-(O-A)ₖ-OH (I)
worin k für 1, 2 oder 3 steht, R für C₁-C₆-Alkyl steht und A für 1,2-Ethandiyl, 1,2-Propandiyl oder 1,3-Propandiyl steht; wobei das Lösungsmittel der Formel I bei 25°C eine Löslichkeit in Wasser von mehr als 100 g/l aufweist; und
ii) wenigstens ein zweites, wenigstens ein Sauerstoffatom aufweisendes organisches Lösungsmittel, das bei 25°C eine Löslichkeit in Wasser von weniger als 100 g/l aufweist, enthält,
wobei der Metallkomplexfarbstoff A ausgewählt ist unter
Kupferphthalocyaninen, welche 2 bis 4 Substituenten tragen, die ausgewählt sind unter amidierten Sulfonylgruppen, und deren Mischungen und
symmetrischen und unsymmetrischen 1:2 Metallkomplexen von Mono- oder Diazofarbstoffen und deren Mischungen, worin der freie Ligand des Metallkomplexfarbstoffs A durch die Formeln L1-H₂ oder L2-H₂ beschrieben wird 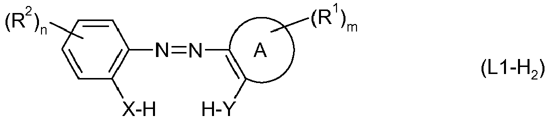 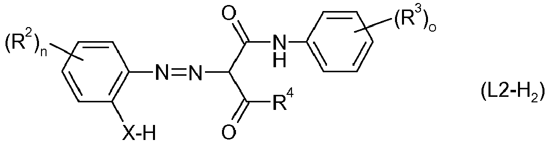 worin
X-H und Y-H unabhängig voneinander für OH, NH₂ oder COOH stehen;
n, m und o unabhängig voneinander für 0, 1, 2 oder 3 stehen;
A für einen unter Phenyl, Naphthyl, Pyridyl und Pyrazolyl ausgewählten aromatischen Rest steht,
R¹ unabhängig voneinander ausgewählt ist (sind) unter Halogen, Nitro, Cyano, OH, COOH, C₁-C₄-Alkyl, C₁-C₄-Alkoxy, C₁-C₄-Alkoxy-C₁-C₄-alkyl, C₁-C₄-Alkylsulfonyl, Aminosulfonyl, Mono- oder Di-C₁-C₄-alkylaminosulfonyl, C₁-C₄-Alkylsulfonylamino, C₁-C₄-Alkylcarbonylamino, Phenyl und Phenylsulfonylamino, wobei der Phenylrest der beiden letztgenannten Gruppen seinerseits 1, 2 oder 3 gleiche oder verschiedene Substituenten aufweisen kann, die unter Halogen, Nitro, Cyano, OH, COOH, C₁-C₄-Alkyl, C₁-C₄-Alkoxy, C₁-C₄-Alkoxy-C₁-C₄-alkyl, C₁-C₄-Alkylsulfonyl, Aminosulfonyl, Mono- oder Di-C₁-C₄-alkylaminosulfonyl und C₁-C₄-Alkylsulfonylamino ausgewählt sind, wobei einer der Reste R¹ auch für eine Gruppe N=N-Ph stehen kann, worin Ph für einen Phenylrest steht, der gegebenenfalls 1, 2 oder 3 gleiche oder verschiedene Substituenten aufweisen kann, die unter Halogen, Nitro, Cyano, OH, COOH, C₁-C₄-Alkyl, C₁-C₄-Alkoxy, C₁-C₄-Alkoxy-C₁-C₄-alkyl, C₁-C₄-Alkylsulfonyl, Aminosulfonyl, Mono- oder Di-C₁-C₄-alkylaminosulfonyl und C₁-C₄-Alkylsulfonylamino ausgewählt sind;
R², R³ unabhängig voneinander ausgewählt sind unter Halogen, Nitro, Cyano, OH, COOH, NH₂, C₁-C₄-Alkyl, C₁-C₄-Alkoxy, C₁-C₄-Alkoxy-C₁-C₄-alkyl, C₁-C₄-Alkylsulfonyl, Aminosulfonyl, Mono- oder Di-C₁-C₄-alkylaminosulfonyl, C₁-C₄-Alkylcarbonylamino und C₁-C₄-Alkylsulfonylamino oder einer der Reste R² oder R³ auch für eine Gruppe N=N-Ph stehen kann, worin Ph für einen Phenylrest steht, der gegebenenfalls 1, 2 oder 3 gleiche oder verschiedene Substituenten aufweisen kann, die unter Halogen, Nitro, Cyano, OH, COOH, C₁-C₄-Alkyl, C₁-C₄-Alkoxy, C₁-C₄-Alkoxy-C₁-C₄-alkyl, C₁-C₄-Alkylsulfonyl, Aminosulfonyl, Mono- oder Di-C₁-C₄-alkylaminosulfonyl und C₁-C₄-Alkylsulfonylamino ausgewählt sind; und
R⁴ für C₁-C₄-Alkyl steht.

2. Flüssigfarbstoffpräparation nach Anspruch 1, worin das Lösungsmittel der Formel I ausgewählt ist unter C₄H₉-(O-CH₂CH₂)₂-OH (Butoxyethoxyethanol), CH₃-(O-C₃H₆)₂-OH (Dipropylenglykolmonomethylether) und CH₃-O-C₃H₆-OH (Methoxypropanol).

3. Flüssigfarbstoffpräparation nach Anspruch 1 oder 2, enthaltend das Lösungsmittel der Formel I in einer Menge von 10 bis 80 Gew.-%, bezogen auf das Gesamtgewicht der Flüssigfarbstoffpräparation.

4. Flüssigfarbstoffpräparation nach einem der vorhergehenden Ansprüche, worin das wenigstens ein Sauerstoffatom aufweisende organische Lösungsmittel eine aliphatische oder cycloaliphatische Verbindung ist, die neben Wasserstoff aus 4 bis 25 C-Atomen und 1 bis 3 Sauerstoffatomen aufgebaut ist.

5. Flüssigfarbstoffpräparation nach einem der vorhergehenden Ansprüche, worin das wenigstens ein Sauerstoffatom aufweisende organische Lösungsmittel ausgewählt ist unter n-Butanol, Isobutanol, Alkanolen mit wenigstens 5 C-Atomen, Cycloalkanolen mit wenigstens 5 C-Atomen, aliphatischen und cycloaliphatischen Ketonen mit wenigstens 5 C-Atomen, C₂-C₁₀-Alkylestern aliphatischer C₁-C₄-Carbonsäuren, C₅-C₁₀-Cycloalkylester aliphatischer C₁-C₄-Carbonsäuren, Diolen mit wenigstens 6 C-Atomen sowie Gemischen dieser Lösungmittel.

6. Flüssigfarbstoffpräparation nach einem der vorhergehenden Ansprüche, enthaltend das zweite, wenigstens ein Sauerstoffatom aufweisende organische Lösungsmittel in einer Menge von 1 bis 80 Gew.-%, bezogen auf das Gesamtgewicht der Flüssigfarbstoffpräparation.

7. Flüssigfarbstoffpräparation nach einem der vorhergehenden Ansprüche, enthaltend den Metallkomplexfarbstoff A in einer Menge von 0,5 bis 30 Gew.-%, bezogen auf das Gesamtgewicht der Flüssigfarbstoffpräparation.

8. Flüssigfarbstoffpräparation nach einem der vorhergehenden Ansprüche, enthaltend zusätzlich Wasser in einer Menge bis 30 Gew.-%, bezogen auf das Gesamtgewicht der Flüssigfarbstoffpräparation.

9. Verwendung einer Flüssigfarbstoffpräparation nach einem der vorhergehenden Ansprüche zur Herstellung einer wässrigen Farbstoffflotte.

10. Verwendung nach Anspruch 9 zur Herstellung einer wässrigen Flotte für die Spritzfärbung von Leder.

11. Verwendung einer Flüssigfarbstoffpräparation nach einem der Ansprüche 1 bis 8 zur Herstellung einer farbigen Lackformulierung.

## Claims

1. A liquid dye formulation of a nonsulfonated metal complex dye A, comprising at least an organic metal complex dye and a mixture of organic solvents and also optionally water, the mixture of organic solvents comprising essentially
i) at least one first solvent of the general formula I
R-(O-A)ₖ-OH (I)
where k represents 1, 2 or 3, R represents C₁-C₆-alkyl and A represents 1,2-ethanediyl, 1,2-propanediyl or 1,3-propanediyl, the solvent of the formula I having a solubility in water of more than 100 g/l at 25°C; and
ii) at least a second organic solvent which comprises at least one oxygen atom and has a solubility in water of less than 100 g/l at 25°C,
the metal complex dye A being selected from
copper phthalocyanines which have 2 to 4 substituents which are selected from amidated sulfonyl groups, and mixtures thereof and
the group consisting of symmetrical and asymmetrical 1:2 metal complexes of mono- or disazo dyes and mixtures thereof, wherein the free ligand of the metal complex dye A is described by the formulae L1-H₂ or L2-H₂ 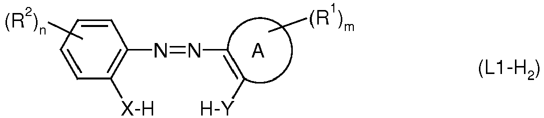 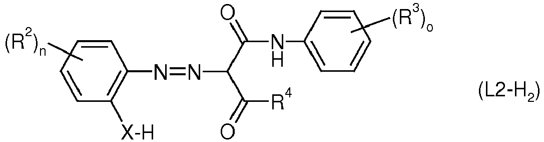 where
X-H and Y-H independently represent OH, NH₂ or COOH;
n, m and o independently represent 0, 1, 2 or 3;
A represents an aromatic radical selected from the group consisting of phenyl, naphthyl, pyridyl and pyrazolyl,
R¹ in each occurrence is independently selected from the group consisting of halogen, nitro, cyano, OH, COOH, C₁-C₄-alkyl, C₁-C₄-alkoxy, C₁-C₄-alkoxy-C₁-C₄-alkyl, C₁-C₄-alkylsulfonyl, aminosulfonyl, mono- or di-C₁-C₄-alkylaminosulfonyl, C₁-C₄-alkylsulfonylamino, C₁-C₄-alkylcarbonylamino, phenyl and phenylsulfonylamino, the phenyl radical in the last two groups mentioned itself being unsubstituted or substituted by 1, 2 or 3 identical or different substituents selected from the group consisting of halogen, nitro, cyano, OH, COOH, C₁-C₄-alkyl, C₁-C₄-alkoxy, C₁-C₄-alkoxy-C₁-C₄-alkyl, C₁-C₄-alkylsulfonyl, aminosulfonyl, mono- or di-C₁-C₄-alkylaminosulfonyl and C₁-C₄-alkylsulfonylamino, although one R¹ radical may also be an N=N-Ph group where Ph represents a phenyl radical which is unsubstituted or substituted by 1, 2 or 3 identical or different substituents selected from the group consisting of halogen, nitro, cyano, OH, COOH, C₁-C₄-alkyl, C₁-C₄-alkoxy, C₁-C₄-alkoxy-C₁-C₄-alkyl, C₁-C₄-alkylsulfonyl, aminosulfonyl, mono- or di-C₁-C₄-alkylaminosulfonyl and C₁-C₄-alkylsulfonylamino;
R² and R³ are independently selected from the group consisting of halogen, nitro, cyano, OH, COOH, NH₂, C₁-C₄-alkyl, C₁-C₄-alkoxy, C₁-C₄-alkoxy-C₁-C₄-alkyl, C₁-C₄-alkylsulfonyl, aminosulfonyl, mono-or di-C₁-C₄-alkylaminosulfonyl, C₁-C₄-alkylcarbonylamino and C₁-C₄-alkylsulfonylamino, or one of R² and R³ may also be an N=N-Ph group where Ph represents a phenyl radical which is unsubstituted or substituted by 1, 2 or 3 identical or different substituents selected from the group consisting of halogen, nitro, cyano, OH, COOH, C₁-C₄-alkyl, C₁-C₄-alkoxy, C₁-C₄-alkoxy-C₁-C₄-alkyl, C₁-C₄-alkylsulfonyl, aminosulfonyl, mono- or di-C₁-C₄-alkylaminosulfonyl and C₁-C₄-alkylsulfonylamino; and
R⁴ represents C₁-C₄-alkyl.

2. The liquid dye formulation according to claim 1 wherein the solvent of the formula I is selected from the group consisting of C₄H₉-(O-CH₂CH₂)₂-OH (butoxyethoxyethanol), CH₃-(O-C₃H₆)₂-OH (dipropylene glycol monomethyl ether) and CH₃-O-C₃H₆-OH (methoxypropanol).

3. The liquid dye formulation according to claim 1 or 2 that comprises the solvent of the formula I in an amount from 10% to 80% by weight, based on the total weight of the liquid dye formulation.

4. The liquid dye formulation according to any one of the preceding claims wherein the organic solvent comprising at least one oxygen atom is an aliphatic or cycloaliphatic compound which comprises from 4 to 25 carbon atoms and from 1 to 3 oxygen atoms as well as hydrogen.

5. The liquid dye formulation according to any one of the preceding claims wherein the organic solvent comprising at least one oxygen atom is selected from the group consisting of n-butanol, isobutanol, alkanols having at least 5 carbon atoms, cycloalkanols having at least 5 carbon atoms, aliphatic and cycloaliphatic ketones having at least 5 carbon atoms, C₂-C₁₀-alkyl esters of aliphatic C₁-C₄ carboxylic acids, C₅-C₁₀-cycloalkyl esters of aliphatic C₁-C₄ carboxylic acids, diols having at least 6 carbon atoms and mixtures thereof.

6. The liquid dye formulation according to any one of the preceding claims that comprises the second organic solvent comprising at least one oxygen atom in an amount from 1% to 80% by weight, based on the total weight of the liquid dye formulation.

7. The liquid dye formulation according to any one of the preceding claims that comprises the metal complex dye A in an amount from 0.5% to 30% by weight, based on the total weight of the liquid dye formulation.

8. The liquid dye formulation according to any one of the preceding claims that further comprises water in an amount up to 30% by weight, based on the total weight of the liquid dye formulation.

9. The use of a liquid dye formulation according to any one of the preceding claims for producing an aqueous dye liquor.

10. The use according to claim 9 for producing an aqueous liquor for spray-dyeing leather.

11. The use of a liquid dye formulation according to any one of claims 1 to 8 for producing a colored coating formulation.

## Revendications

1. Préparations colorantes liquides d'un colorant complexe métallique A, qui ne présente pas de groupes sulfoacides, comprenant au moins un colorant complexe métallique organique et un mélange de solvants organiques ainsi que le cas échéant de l'eau, le mélange de solvants organiques contenant essentiellement
i) au moins un premier solvant de formule générale I
R-(O-A)ₖ-OH (I)
dans laquelle k vaut 1, 2 ou 3, R représente C₁-C₆-alkyle et A représente 1,2-éthanediyle, 1,2-propanediyle ou 1,3-propanediyle ; le solvant de formule I présentant, à 25°C, une solubilité dans l'eau supérieure à 100 g/l ; et
ii) au moins un deuxième solvant organique présentant au moins un atome d'oxygène, qui présente, à 25°C, une solubilité dans l'eau inférieure à 100 g/l,
le colorant complexe métallique A étant choisi parmi les phtalocyanines de cuivre, qui portent 2 à 4 substituants, qui sont choisis parmi les groupes sulfonyle amidés et leurs mélanges et les complexes métalliques symétriques et asymétriques 1:2 de colorants monoazo et diazo et leurs mélanges, le ligand libre du colorant complexe métallique A étant décrit par les formules L1-H₂ ou L2-H₂ 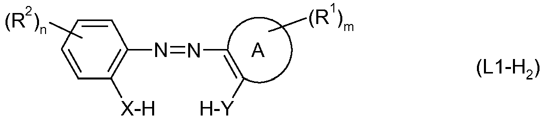 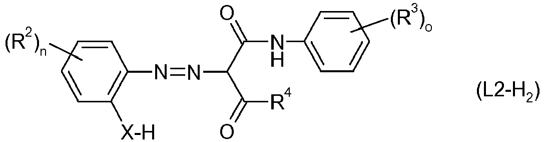 dans lesquelles
X-H et Y-H représentent, indépendamment l'un de l'autre, OH, NH₂ ou COOH ;
n, m et o valent, indépendamment les uns des autres, 0, 1, 2 ou 3 ;
A représente un radical aromatique choisi parmi phényle, naphtyle, pyridyle et pyrazolyle,
R¹ est/sont choisi(s), indépendamment, parmi halogène, nitro, cyano, OH, COOH, C₁-C₄-alkyle, C₁-C₄-alcoxy, C₁-C₄-alcoxy-C₁-C₄-alkyle, C₁-C₄-alkylsulfonyle, aminosulfonyle, mono-C₁-C₄-alkylaminosulfonyle ou di-C₁-C₄-alkylaminosulfonyle, C₁-C₄-alkylsulfonylamino, C₁-C₄-alkylcarbonylamino, phényle et phénylsulfonylamino, le radical phényle des deux derniers groupes mentionnés pouvant porter à son tour 1, 2 ou 3 substituants identiques ou différents, qui sont choisis parmi halogène, nitro, cyano, OH, COOH, C₁-C₄-alkyle, C₁-C₄-alcoxy, C₁-C₄-alcoxy-C₁-C₄-alkyle, C₁-C₄-alkylsulfonyle, aminosulfonyle, mono-C₁-C₄-alkylaminosulfonyle ou di-C₁-C₄-alkylaminosulfonyle et C₁-C₄-alkylsulfonylamino, un des radicaux R¹ pouvant également représenter un groupe N=N-Ph, dans lequel Ph représente un groupe phényle, qui peut le cas échéant présenter 1, 2 ou 3 substituants identiques ou différents, qui sont choisis parmi halogène, nitro, cyano, OH, COOH, C₁-C₄-alkyle, C₁-C₄-alcoxy, C₁-C₄-alcoxy-C₁-C₄-alkyle, C₁-C₄-alkylsulfonyle, aminosulfonyle, mono-C₁-C₄-alkylaminosulfonyle ou di-C₁-C₄-alkylaminosulfonyle et C₁-C₄-alkylsulfonylamino ;
R², R³ sont choisis, indépendamment l'un de l'autre, parmi halogène, nitro, cyano, OH, COOH, NH₂, C₁-C₄-alkyle, C₁-C₄-alcoxy, C₁-C₄-alcoxy-C₁-C₄-alkyle, C₁-C₄-alkylsulfonyle, aminosulfonyle, mono-C₁-C₄-alkylaminosulfonyle ou di-C₁-C₄-alkylaminosulfonyle, C₁-C₄-alkylcarbonylamino et C₁-C₄-alkylsulfonylamino ou un des radicaux R² ou R³ peut également représenter un groupe N=N-Ph, dans lequel Ph représente un radical phényle, qui peut le cas échéant présenter 1, 2 ou 3 substituants identiques ou différents, qui sont choisis parmi halogène, nitro, cyano, OH, COOH, C₁-C₄-alkyle, C₁-C₄-alcoxy, C₁-C₄-alcoxy-C₁-C₄-alkyle, C₁-C₄-alkylsulfonyle, aminosulfonyle, mono-C₁-C₄-alkylaminosulfonyle ou di-C₁-C₄-alkylaminosulfonyle et C₁-C₄-alkylsulfonylamino ; et
R⁴ représente C₁-C₄-alkyle.

2. Préparation colorante liquide selon la revendication 1, dans laquelle le solvant de formule I est choisi parmi C₄H₉-(O-CH₂CH₂)₂-OH (butoxyéthoxyéthanol), CH₃-(O-C₃H₆)₂-OH (dipropylèneglycolmonométhyléther) et CH₃-O-C₃H₆-OH (méthoxypropanol).

3. Préparation colorante liquide selon la revendication 1 ou 2, contenant le solvant de formule I en une quantité de 10 à 80% en poids, par rapport au poids total de la préparation colorante liquide.

4. Préparation colorante liquide selon l'une quelconque des revendications précédentes, dans laquelle le solvant organique présentant au moins un atome d'oxygène est un composé aliphatique ou cycloaliphatique, qui est constitué, outre par de l'hydrogène, par 4 à 25 atomes de carbone et 1 à 3 atomes d'oxygène.

5. Préparation colorante liquide selon l'une quelconque des revendications précédentes, dans laquelle le solvant organique présentant au moins un atome d'oxygène est choisi parmi le n-butanol, l'isobutanol, les alcanols présentant au moins 5 atomes de carbone, les cycloalcanols présentant au moins 5 atomes de carbone, les cétones aliphatiques et cycloaliphatiques présentant au moins 5 atomes de carbone, les esters C₂-C₁₀-alkyliques d'acides C₁-C₄-carboxyliques aliphatiques, les esters C₅-C₁₀-cycloalkyliques d'acides C₁-C₄-carboxyliques aliphatiques, les diols présentant au moins 6 atomes de carbone ainsi que des mélanges de ces solvants.

6. Préparation colorante liquide selon l'une quelconque des revendications précédentes, contenant le deuxième solvant organique, présentant au moins un atome d'oxygène, en une quantité de 1 à 80% en poids, par rapport au poids total de la préparation colorante liquide.

7. Préparation colorante liquide selon l'une quelconque des revendications précédentes, contenant le colorant complexe métallique A en une quantité de 0,5 à 30% en poids, par rapport au poids total de la préparation colorante liquide.

8. Préparation colorante liquide selon l'une quelconque des revendications précédentes, contenant en plus de l'eau en une quantité de jusqu'à 30% en poids, par rapport au poids total de la préparation colorante liquide.

9. Utilisation d'une préparation colorante liquide selon l'une quelconque des revendications précédentes pour la préparation d'un bain aqueux de colorant.

10. Utilisation selon la revendication 9 pour la préparation d'un bain aqueux pour la coloration par pulvérisation de cuir.

11. Utilisation d'une préparation colorante liquide selon l'une quelconque des revendications 1 à 8 pour la préparation d'une formulation colorée de laque.
